# DEMANDE DE BREVET EUROPEEN

(11) **EP 1 098 473 A1**
(43) Date de publication de la demande: **09.05.2001**
(21) Numéro de dépôt: 00402988.0
(22) Date de dépôt: 26.10.2000
(51) Int. Cl.: H04L 9/32, G08C 17/00, G07F 7/08, H04Q 7/20, H04B 7/185, H04N 7/173

(54) **Procédé de paiement sécurisé par l'intermédiaire d'un téléphone mobile**

(30) Priorité: 03.11.1999 FR 9913733
(71) Demandeur: SAGEM S.A., 75116 Paris (FR)
(72) Inventeur: Sarradin, Jean-Louis, 95190 Fontenay en Parisis (FR)
(74) Mandataire: Schmit, Christian Norbert Marie

(57) **Abrégé**

Pour résoudre un problème de paiement au cours d'une session de télé-achat on prévoit de faire composer par un utilisateur, avec sa télécommande (7), un numéro (GSM) de téléphone de son téléphone mobile (10). Son numéro de téléphone mobile est transmis à un centre de paiement 9 qui en retour appelle le téléphone mobile désigné. Dans ce téléphone mobile on peut mettre en oeuvre une opération complexe (34) de paiement comportant l'identification du débiteur, par prélèvement de son identité dans une carte à puce (6) de ce débiteur introduite dans son téléphone mobile, une validation de cette carte à puce et cet utilisateur par une composition d'un code secret de cette carte à puce et un accord sur la transaction. On montre que toute la transaction est alors menée au cours d'une conversation téléphonique privée (11-13). Elle est alors à l'abri de toutes les manipulations auxquelles elle aurait pu être soumise si elle avait été transmise par un câble (8) servant, d'une manière publique, à une télédistribution.

## Description

La présente invention a pour objet un procédé de paiement sécurisé. Elle est plus particulièrement utilisable dans le domaine dit du télé-achat, lorsqu'un acheteur à son domicile face à son téléviseur se décide à acheter un objet ou un service qui lui est présenté par un programme de télévision, souvent au cours d'opérations de type promotionnel. A ce titre elle est aussi applicable aux procédés dits pay per view - payer pour voir, dans lesquels le service acheté est un service de visualisation qui est en outre proposé par une chaîne de télévision au cours de ce programme de présentation.

Dans le domaine du télé-achat, des objets à acheter sont présentés dans des programmes de télévision, voire dans des catalogues présentés sur un téléviseur, et dont un utilisateur peut faire défiler les articles au moyen de sa télécommande. Pour procéder à l'achat dans les premiers temps une communication téléphonique entre l'acheteur et le vendeur, au moment de la présentation, était nécessaire. Ces méthodes de vente se sont ensuite perfectionnées, et on a vu apparaître des décodeurs (utilisables par ailleurs pour accéder à des émissions de télévision cryptées) qui possèdent un moyen de liaison bidirectionnelle avec un opérateur émetteur d'émissions de télévision, directement ou indirectement. Cette liaison bidirectionnelle prend le plus souvent la forme d'une liaison par câble, et on parle alors de câblo-opérateur. Mais dans le cadre de l'invention, il pourrait être également question de liaisons bidirectionnelles par satellite. De même, il serait envisageable que le retour d'information, du téléspectateur vers l'opérateur, se réalise par un modem connectable à une ligne téléphonique.

Dans ce cadre, ces décodeurs sont également munis d'un lecteur de cartes à puce bancaires et, au cours du télé-achat ou autre, l'utilisateur est invité à introduire sa carte à puce bancaire dans ce lecteur du décodeur. D'une manière classique, la validité de cette carte à puce est alors testée par le décodeur en demandant à l'utilisateur de composer un code secret, code PIN (Personal Identification Number - Numéro Personnel d'Identification). Cette composition est naturellement réalisée au moyen d'une télécommande, voire d'un clavier dont pourrait être muni ce décodeur. Puis le décodeur, en interprétant un programme de paiement en relation avec un objet montré sur l'écran, lance une session de paiement au cours de laquelle l'identité de l'utilisateur est prélevée dans la carte à puce pour constituer un message de paiement.

Ce type de paiement présente divers problèmes. Le premier problème est celui qu'il n'est accessible qu'aux décodeurs qui sont munis du lecteur de cartes à puce et des logiciels de paiement correspondants. Alors que l'incorporation de nouveaux logiciels est en général aisément réalisable dans un décodeur, l'adjonction d'un lecteur de cartes à puce conduit naturellement à la réforme du précédent décodeur et à son remplacement par un nouveau décodeur. Le coût de ce remplacement doit être supporté par l'opérateur. Cette solution est trop onéreuse.

Par ailleurs, pour les décodeurs qui sont munis d'un lecteur de cartes à puce, le risque de banalisation des cryptages réalisés dans les cartes à puce devient très important. En effet d'une part pour les compositions des codes PIN au moyen d'une télécommande, le rayonnement infrarouge de cette télécommande peut être capté par des fraudeurs indélicats, ceux-ci étant tentés par la suite d'utiliser l'information dont ils ont eu connaissance. D'autre part, le fait de faire passer une communication de type privé, le message de paiement comportant les indications relatives au payeur, sur un moyen de transmission à caractère public, le câble de télédistribution, présente pour des fraudeurs une mine importante d'informations qui leur permettrait d'attaquer le système de secret dans le but d'en démonter les mécanismes. En conséquence ces systèmes qui présentent l'avantage de fonctionner présentent l'inconvénient, à terme, d'induire des problèmes de falsification insurmontables.

Dans l'invention, pour remédier à ces problèmes, on a prévu d'agir totalement différemment. Dans son principe, dans l'invention, au cours d'une session de télé-achat ou autre, encore que l'achat concerné n'est pas nécessairement lié à la visualisation d'une session de télévision, un utilisateur d'un décodeur compose avec sa télécommande ou avec un clavier du décodeur un message de paiement comportant essentiellement une indication d'un numéro de téléphone mobile. Ce numéro de téléphone mobile est celui d'un téléphone mobile appartenant à cet utilisateur et surtout à sa disposition. Ce numéro de téléphone mobile est alors envoyé de manière automatique à un serveur de paiement par le câble d télédistribution (ou autre). En réponse, le serveur appelle le téléphone mobile dont il vient de recevoir le numéro. En conséquence, immédiatement après avoir composé avec sa télécommande en direction de son décodeur son numéro de téléphone mobile, l'utilisateur entend son téléphone mobile signaler la présence d'un appel. L'appel peut toutefois être différé, en fin de mois par exemple. Dans ces conditions, l'utilisateur décroche et se trouve en relation avec le serveur de paiement. Dans ce cas, par opposition à la liaison de type public (sur le câble de télédistribution), l'utilisateur est maintenant dans une relation de type privé entre son téléphone mobile et ce serveur de paiement. Dans ces conditions, on peut lancer d'une manière privée une session de validation d'un paiement quelconque.

Dans un perfectionnement, bien entendu le serveur de paiement sera un serveur automatique, notamment celui d'une banque du fournisseur de biens ou de services, et plutôt que l'utilisateur s'identifie vocalement auprès d'un opérateur (personne physique) de ce serveur de paiement, il aura à composer avec le clavier de son téléphone mobile un code d'identification, vraisemblablement un code bancaire, pour valider une opération dont par ailleurs on peut lui indiquer la nature sur l'écran de son téléphone mobile. Dans une variante encore plus perfectionnée, le téléphone mobile sera muni d'un lecteur de cartes à puce qui sera capable de lancer, en interne au téléphone mobile, une session de sécurité pour valider le paiement.

L'invention a donc pour objet un procédé de paiement sécurisé comportant
- une édition et une transmission d'un message de paiement à un serveur de paiement,
- et une validation sécurisée de cette édition et ou de cette transmission, notamment par composition d'un code secret, caractérisé en ce qu'il comporte
- une émission à l'aide d'une télécommande ou d'un décodeur de télévision d'un message représentant un numéro de téléphone mobile,
- une réception de ce numéro de téléphone mobile par un serveur de paiement,
- un appel par ce serveur de paiement d'un téléphone mobile correspondant à ce numéro de téléphone mobile.

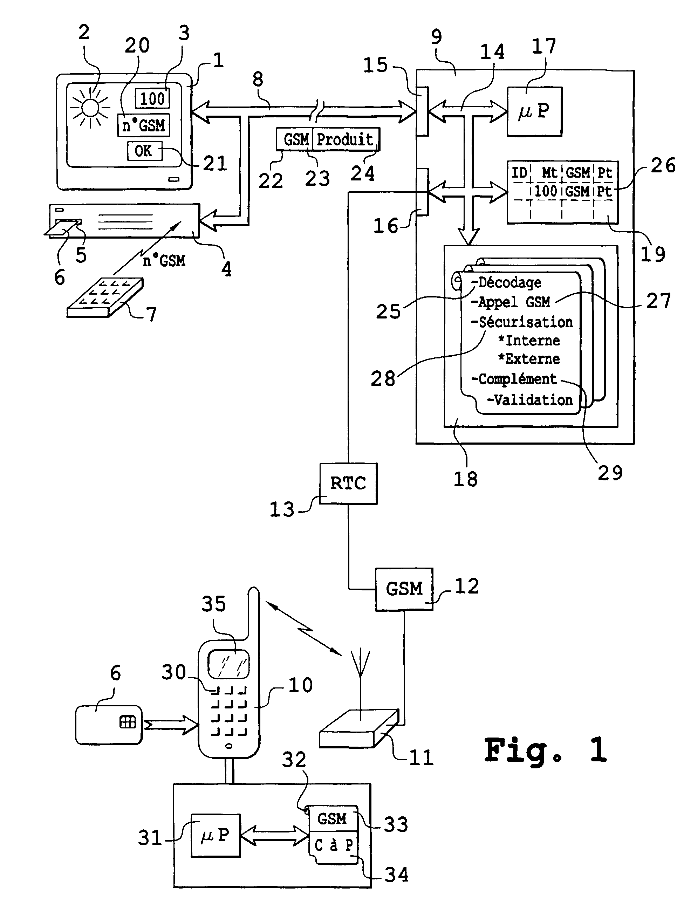

L'invention sera mieux comprise à la lecture de la description qui suit et à l'examen des figures qui l'accompagnent. Celles-ci ne sont présentées qu'à titre indicatif et nullement limitatif de l'invention. La figure 1 montre une représentation schématique des moyens mis en oeuvre dans le procédé de l'invention.

Notamment dans le cadre d'un télé-achat, ou d'une visualisation de type pay per view, un utilisateur visualise sur un téléviseur 1 une présentation d'un objet ou d'un service 2 à acheter à un prix 3 indiqué de préférence également sur l'écran. L'objet 2 et le prix 3 peuvent être par ailleurs référencés par une identification de produit dans un fichier tenu chez un fournisseur. Cette identification de produit peut par ailleurs également être associée à une image visualisée sur le téléviseur 1 à un instant donné, c'est-à-dire en définitive être associée à une date précise. Un message de paiement désignant le montant pourra donc comporter soit le montant 3 lui-même, soit la désignation de l'objet 2, soit la désignation d'une référence de produit (la page visualisée d'un catalogue), soit encore une date d'une session au cours de laquelle cet objet a été présenté.

Un message de paiement doit comporter également une identité d'un créancier. Le créancier est naturellement le vendeur de l'objet et en principe dans les fichiers tenus par ce créancier en regard de ce produit les références de ce dernier, notamment un identifiant de créancier correspondant à un compte bancaire sont indiqués. Il reste maintenant à identifier le débiteur et à sécuriser la transaction.

Dans l'état de la technique, un décodeur 4 est relié au téléviseur 1 et peut comporter un lecteur 5 de cartes à puce. Dans le lecteur 5 l'utilisateur est invité à introduire une carte à puce bancaire 6. Au moment de cette introduction, ou au moment de l'achat, le décodeur 4 est capable de lancer un programme, éventuellement montré sur l'écran du téléviseur 1, invitant l'utilisateur à composer avec une télécommande 7, ou avec un clavier non représenté du décodeur 4, son code PIN. L'introduction de la carte à puce implique également le prélèvement des informations relatives à l'identité du débiteur, notamment son compte bancaire. La validation est obtenue au cours de la session de composition du code PIN.

Une fois que ces opérations sont terminées, le message de paiement en entier comportant la désignation du montant, ou au moins du produit, ainsi que l'identité du débiteur est acheminé par une liaison de type public 8, notamment un câble de télédistribution, vers un serveur de paiement 9. Ce serveur de paiement 9 est contenu dans des services d'une banque du créancier par exemple. Dans ce cas, les services de la banque, par l'identifiant du créancier, retrouvent le compte bancaire de ce créancier. Le serveur de paiement 9 peut ne pas être directement en relation avec le câble 8, mais plutôt être en relation avec des circuits de traitement d'informations d'un câblo-opérateur qui gèrent la télédistribution d'émissions sur le câble 8 et qui sont en relation avec le décodeur 4. Comme indiqué précédemment, ces modes d'édition du message de paiement, de composition du code secret et de transmission sont fragiles vis à vis des fraudeurs qui peuvent espionner le câble en toute impunité.

Dans l'invention on prévoit d'agir différemment. Avec la télécommande 7, ou directement à partir du clavier du décodeur 4, l'utilisateur est amené à composer, selon un programme lancé par le décodeur 4 et de préférence présenté sur l'écran du téléviseur 1, le numéro de son téléphone mobile 10. Ce numéro est représenté dans la figure 1 par la désignation GSM pour Global System for Mobile - Système Général de Téléphonie Mobile. Cette composition peut éventuellement être préenregistrée dans la télécommande et ou dans le décodeur, de telle façon que l'appui sur une touche spéciale de celle-ci (par exemple avec un logo correspondant) provoque la transmission de ce numéro GSM. De préférence ce numéro GSM est alors affiché sur l'écran du téléviseur 1. Le numéro peut par ailleurs être mémorisé dans le téléviseur 1 ou le décodeur 4 et être sélectionné par l'appui sur la touche spéciale.

Un tel téléphone mobile 10 est capable d'échanger des communications de paroles ou de données en entrant en relation hertzienne avec une station de base 11 dans sa proximité. La station de base 11 est reliée à un réseau 12 de téléphonie mobile, par exemple un réseau GSM. Le réseau GSM 12 est relié, éventuellement par l'intermédiaire d'un réseau téléphonique commuté 13 au serveur de paiement 9. Notamment, un modem 16 de ce serveur 9 peut assurer la communication. Le serveur de paiement 9 comporte un bus 14 reliant, par des interfaces respectivement 15 et 16 (le modem), le décodeur 4 et le téléphone mobile 10 à une unité de traitement 17 qui met en oeuvre, sur des données reçues par ces interfaces, un programme contenu dans une mémoire-programme 18 de ce serveur 9. Le bus 14 est par ailleurs relié à une mémoire de données 19 comportant des messages de paiement en cours de constitution, exécutés, ou à exécuter. Ces messages de paiement sont notamment utilisés dans des procédés connus de compensation financière pour réaliser des transferts de monnaies scripturales entre des créanciers et des débiteurs.

Donc avec un programme contenu dans le décodeur 4 on affiche sur le téléviseur 1 une zone 20 et une invitation à composer un numéro de téléphone GSM correspondant au téléphone 10, de la même façon que dans l'état de la technique on invitait à composer un code PIN. Une touche de la télécommande 7, ou une option 21 d'un menu affiché sur le téléviseur 1, a pour objet de faire transmettre des éléments 22 d'un message de paiement. Selon ce qui a été dit précédemment, ces éléments 22 comportent essentiellement une désignation 23 du numéro de téléphone GSM et une désignation 24 du produit 2 (correspondant à son prix 3). L'envoi 21 prévoit bien entendu un encapsulage du message 22 de telle façon que celui-ci puisse être acheminé jusqu'au serveur de paiement 9 d'une manière automatique, par tous les circuits interposés, notamment ceux du câblo-opérateur.

Le message 22 est reçu et est décodé en une première opération de décodage 25 par le serveur 9. Cette opération de décodage a pour objet de commencer à remplir, dans la mémoire 19, un enregistrement 26 correspondant à un paiement. Dans l'enregistrement 26 on fait correspondre à un montant, éventuellement reçu par la désignation 24 du message 22, ou prélevé dans une mémoire en correspondance d'une désignation Pt de produit contenue dans ce message 22, le numéro de téléphone GSM. Dès que cette indication GSM a été mémorisée, le circuit de traitement 17 lance en une étape 27 un appel du téléphone mobile 10 avec le numéro qui vient de lui être communiqué. Cet appel est acheminé par les réseaux 13, 12 et la station de base 11 au téléphone mobile 10.

Au moment où cet appel est reçu, l'utilisateur du téléphone 10 décroche, en pratique, il appuie sur une touche OK ou équivalent de prise de ligne. A ce moment se déroule une étape 28 de sécurisation de la transaction puis une étape 29 de complément de l'enregistrement 26. Les deux étapes 28 et 29 peuvent bien entendu être interverties.

L'étape 28 de sécurisation peut être réalisée en interne c'est-à-dire à l'intérieur du serveur de paiement 9, ou en externe c'est-à-dire dans le téléphone mobile 10. Dans le cadre de la sécurisation interne, un opérateur personne physique ou de préférence un circuit automatique interroge le porteur du téléphone mobile 10 pour que celui-ci compose avec le clavier 30 de son téléphone un code secret, un code bancaire, voire un code PIN spécifique. Dans ce cas, ce code est acheminé par la liaison privée 11, 12, 13 au serveur de paiement 9.

De préférence la sécurisation sera réalisée en externe. Dans ce but le téléphone mobile 10 comporte un lecteur de cartes à puce pour recevoir une carte à puce bancaire 6. Le téléphone 10 comporte alors un ou des circuits de traitement 31 capable de mettre en oeuvre un programme 32 muni essentiellement de deux fonctions : une fonction GSM 33 et une fonction carte à puce 34. La fonction 33 est une fonction classique comportant la commande de tous les circuits d'un téléphone mobile normal. La fonction 34 est une fonction de validation d'un code secret spécifique à la gestion d'une carte à puce. La fonction 34 peut être partagée pour son exécution entre le serveur 9, le téléphone 10, et la puce de la carte 6. Le déclenchement de la fonction 34 peut être effectué sur l'initiative du serveur de paiement 9. Dans ce cas, la carte à puce 6 ou le téléphone mobile 10 sont capables d'éditer un message de cohérence indiquant que le porteur de la carte à puce est un porteur autorisé puisqu'il en connaît le code secret

Au cours de l'étape 29 l'identification du porteur de la carte à puce 6 est transmise au serveur de paiement 9. Cette identification permet de compléter l'enregistrement 26 de paiement. En effet, en complément, le programme 34 permet au microprocesseur 31 de prélever dans la puce de la carte 6 l'identification du débiteur, qui est un débiteur autorisé puisqu'il a composé directement son code secret et qui est un débiteur qui, par ailleurs, accepte le paiement puisqu'en acceptant de composer son code secret il a accepté en fait de conduire la transaction à son terme. Dans ce but sur l'écran 35 du téléphone mobile 10 peuvent être affichés des éléments du menu relatifs à l'accomplissement de la transaction. Dans le programme 34 lancé par le circuit de traitement 3 on effectue de préférence en plus des calculs de certificats bancaires. Les résultats de ces calculs sont réémis vers le centre de paiement 9. Ces résultats de calcul sont la signature électronique de la transaction. Pour celle-ci, le montant de la transaction peut être impliqué, dans ce cas ce montant est transmis du centre de paiement 9 au téléphone mobile 10 (et ou à la carte à puce 6) avant certification.

Eventuellement si le décodeur 4 est adressable par son numéro de série on peut prévoir de faire transmettre par le câble 8 un message de confirmation de la transaction sur l'écran du téléviseur 1.

## Revendications

1. Procédé de paiement sécurisé comportant
- une édition et une transmission d'un message de paiement à un serveur de paiement (9),
- et une validation (28) sécurisée de cette édition et ou de cette transmission, notamment par composition d'un code secret, caractérisé en ce qu'il comporte
- une émission à l'aide d'une télécommande (7) ou d'un décodeur (4) de télévision d'un message représentant un numéro (GSM) de téléphone mobile,
- une réception de ce numéro de téléphone mobile par un serveur (9) de paiement,
- un appel (11-13) par ce serveur de paiement d'un téléphone mobile (10) correspondant à ce numéro de téléphone mobile.

2. Procédé selon la revendication 1, caractérisé en ce qu'il comporte
- la composition (34) avec ce téléphone mobile du code secret.

3. Procédé selon la revendication 2, caractérisé en ce que
- le code secret est composé avec le clavier (30) du téléphone mobile.

4. Procédé selon l'une des revendications 1 à 3, caractérisé en ce que
- le message de paiement comporte une désignation d'un montant (3), une désignation d'un créancier, et une désignation d'un débiteur,
- le message de paiement est complété par la désignation du débiteur par l'intermédiaire de l'appel du téléphone mobile correspondant à ce numéro de téléphone mobile.

5. Procédé selon l'une des revendications 1 à 4, caractérisé en ce que
- le téléphone mobile est muni d'un lecteur de carte à puce (6),
- la composition avec le téléphone mobile du code secret s'effectue au cours d'une session d'échange entre le téléphone mobile et une carte à puce introduite dans le lecteur.

6. Procédé selon l'une des revendications 1 à 5, caractérisé en ce que
- on préenregistre le message représentant le numéro de téléphone mobile dans la télécommande et ou dans le décodeur, et
- on l'émet avec une touche spéciale de cette télécommande et ou de ce décodeur.

7. Procédé selon l'une des revendications 1 à 6, caractérisé en ce que
- la validation sécurisé de cette édition ou de cette transmission comporte une certification.

8. Procédé selon la revendication 7, caractérisé en ce que
- pour la certification le serveur de paiement transmet le montant de la transaction au téléphone mobile.
